# EUROPÄISCHE PATENTANMELDUNG

(11) **EP 2 039 320 A1**
(43) Veröffentlichungstag der Anmeldung: **25.03.2009**
(21) Anmeldenummer: 08014546.9
(22) Anmeldetag: 14.08.2008
(51) Int. Cl.: A61C 8/00

(54) **Dentalimplantat mit Einsatzelement**

(30) Priorität: 20.09.2007 DE 102007044852; 02.05.2008 EP 08008383
(71) Anmelder: Gebr. Brasseler GmbH & Co. KG, D-32657 Lemgo (DE)
(72) Erfinder: Krumsiek, Michael, 32657 Lemgo (DE); Danger, Karl-Heinz, 32758 Detmold (DE)
(74) Vertreter: Weber, Joachim

(57) **Zusammenfassung**

Die Erfindung bezieht sich auf ein Dentalimplantat mit einem enossalen Bereich (1), an welchem ein koronaler Bereich (2) befestigbar ist, wobei der enossale Bereich (1) zumindest an seiner Außenseite aus einem keramischen Werkstoff gefertigt ist und an seiner dem koronalen Bereich (2) zugewandten Seite mit einer Ausnehmung (3) versehen ist, in welcher mittels eines Fügeverfahrens ein separates Einsatzelement (4) befestigt ist, an welchem der koronale Bereich (2) befestigbar ist, wobei das Einsatzelement (4) formschlüssig mit der Ausnehmung (3) des enossalen Bereichs (1) verbunden ist.

## Beschreibung

Die Erfindung bezieht sich auf ein Dentalimplantat nach den Merkmalen des Oberbegriffs des Anspruchs 1.

Im Einzelnen bezieht sich die Erfindung auf ein zweiteiliges Dentalimplantat, bei welchem nach der Implantation eines enossalen Bereichs ein koronaler Bereich montiert werden kann.

Ganz allgemein sind Dentalimplantate beispielsweise aus der DE 10 2005 032 938 A1 vorbekannt.

Bei Dentalimplantaten ist es wünschenswert, den enossalen Bereich aus einem keramischen Werkstoff zu fertigen oder mit einem keramischen Überzug zu versehen, um eine gute Materialverträglichkeit mit dem Kieferknochen eines Patienten zu erzielen und um die Osseointegration zu verbessern.

Bei zweistückigen oder zweiteiligen Dentalimplantaten besteht die Notwendigkeit, den enossalen Bereich mit dem koronalen Bereich so zu verbinden, dass ein hohes Maß an Funktionstüchtigkeit gewährleistet ist. Üblicherweise erfolgt die Verbindung mittels eines Schraubzapfens oder mittels eines Fügeverfahrens. Hierbei muss die Montage jedoch so möglich sein, dass diese im operativen Umfeld einfach und zuverlässig durchführbar ist. Hierzu wird auf die WO 2006/035011 A1 verwiesen.

Der Erfindung liegt die Aufgabe zugrunde, ein zweistückiges Dentalimplantat zu schaffen, welches bei einfachem Aufbau und einfacher, kostengünstiger Herstellbarkeit die Nachteile des Standes der Technik vermeidet und insbesondere aus keramischen Werkstoffen hergestellt werden kann.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass der enossale Bereich zumindest an seiner Außenseite mit einem keramischen Werkstoff versehen oder aus diesem gefertigt ist und dass an der dem koronalen Bereich zugewandten Seite des enossalen Bereichs eine Ausnehmung vorgesehen ist, in welcher mittels eines Fügeverfahrens ein separates Einsatzelement befestigt ist. An dem Einsatzelement ist der koronale Bereich befestigbar. Das erfindungsgemäße Dentalimplantat zeichnet sich durch eine Reihe erheblicher Vorteile aus. Durch den zweiteiligen Aufbau des enossalen Bereichs ist es möglich, eine günstige Materialauswahl zu schaffen. So kann beispielsweise der enossale Bereich vollständig aus einem keramischen Werkstoff gefertigt werden. In die Ausnehmung wird erfindungsgemäß dann das separate Einsatzelement gefügt. Dieses kann erfindungsgemäß hinsichtlich seiner Materialauswahl aus einem beliebigen Material gefertigt sein, da das Einsatzelement nicht mit dem Körpergewebe des Patienten in Berührung kommt. So ist es erfindungsgemäß möglich, das separate Einsatzelement aus Titan, Stahl, Kunststoff oder auch aus Keramik, beispielsweise einer anderen Keramik als der enossale Bereich, zu fertigen.

Das Einsatzelement, welches hülsenartig ausgebildet ist, ist erfindungsgemäß formschlüssig mit der Ausnehmung des enossalen Bereichs verbunden. Durch die formschlüssige Verbindung ist eine ausreichende Kraftübertragung sichergestellt. Während bei einem ausschließlich durch ein Fügeverfahren befestigten Einsatzelement die zum Einschrauben des Implantats erforderlichen Drehmomente über die Fügeverbindung übertragen werden müssten, ist erfindungsgemäß die Möglichkeit geschaffen, durch die formschlüssige Verbindung zusätzliche Sicherheit zu schaffen und ausreichende Kräfte zu übertragen.

Erfindungsgemäß ist vorgesehen, dass das Einsatzelement (Hülse) aus Kunststoff oder einer spritzgegossenen Keramik besteht. Das Kunststoffmaterial kann beispielsweise ein Hochleistungspolymer aus dem Bereich der Thermoplaste oder ein Duroplast sein. Als Thermoplaste sind beispielsweise PEEK oder PPSU einsetzbar. Ein Duroplast kann beispielsweise ein Harzsystem auf Epoxidharzbasis oder Polyesterharzbasis sein.

Erfindungsgemäß ist es besonders günstig, wenn die verwendeten Kunststoffe zur Erhöhung der mechanischen Eigenschaften verstärkt sind, beispielsweise mit Fasern, beispielsweise Glasfasern oder Kohlefasern. Die Fasern können als kurze Fasern oder als durchgängige Fasern vorliegen.

Bei einer Fertigung des Einsatzelements aus Keramik kann beispielsweise eine Yttrium-teilstabilisierte Zirkonoxidkeramik oder eine Mischkeramik verwendet werden. Letztere kann beispielsweise ein ATZ-Material sein (Aluminia Toughend Zirkonia).

Erfindungsgemäß ist das Einsatzelement (Hülse) formschlüssig mit dem enossalen Bereich verbunden. Somit ist es möglich, das Einsatzelement auch in komplexen Geometrien herzustellen, beispielsweise mittels eines Spritzgussverfahrens. Der Implantatkörper kann gepresst und isostatisch verdichtet sein. Die Verbindung des Einsatzelements mit dem Implantatkörper erfolgt dann beispielsweise mittels eines Klebeverfahrens. Es ist somit erfindungsgemäß möglich, aufwendige Geometrien im Spritzguss herzustellen und den Implantatgrundkörper (enossaler Bereich) mit einem fehlerfreien Gefüge, bedingt durch das isostatische Pressen, zu erzeugen.

Besonders günstig erweist es sich, wenn das Einsatzelement (Hülse) adhäsiv gefügt wird. Hierbei kann es günstig sein, die Außenwandung des Einsatzelements (Hülse) sowie die Innenwandung der Ausnehmung des enossalen Bereichs (Implantat) zu konditionieren. So ist es beispielsweise möglich, die Oberflächen zu silikatisieren oder silanisieren und/oder ein Bonding aufzutragen, welches dann den Klebeverbund zum Befestigungskomposit herstellt. Die verwendeten Klebstoffe sind bevorzugt sterilisierbar und erfüllen die Ansprüche der ISO 10993 hinsichtlich der Biokompatibilität. Erfindungsgemäß kann auch ein Kompositsystem verwendet werden, beispielsweise ein dual-härtendes oder ein chemisch-härtendes Kompositsystem.

Durch die Möglichkeit, das Einsatzelement hinsichtlich der Materialauswahl unabhängig von dem Material des enossalen Bereichs zu gestalten, ist es möglich, ausreichende Materialfestigkeiten vorzusehen, beispielsweise für ein Schraubgewinde zur Befestigung des koronalen Bereichs.

Durch das erfindungsgemäß vorgesehene Fügeverfahren kann das separate Einsatzelement mit einem spaltfreien Verbund mit dem enossalen Bereich gefügt werden, beispielsweise durch ein Klebeverfahren, welches einen adhäsiven Verbund zwischen dem separaten Einsatzelement und dem enossalen Bereich ermöglicht. Zusätzlich ist es erfindungsgemäß möglich, das separate Einsatzelement nicht nur adhäsiv zu befestigen (kraftschlüssig), sondern auch formschlüssig. Hierzu kann es günstig sein, wenn die stirnseitige Ausnehmung des enossalen Bereichs zusätzlich konturiert ist, beispielsweise sechseckig oder mit Kreisbogensegmenten. Hierdurch ergibt sich zusätzlich eine formschlüssige Verankerung, die die Gesamtfestigkeit des fertiggestellten enossalen Bereichs zusätzlich steigert. Erfindungsgemäß ist es in bevorzugter Weiterbildung der Erfindung möglich, in das separate Einsatzelement entweder vor dem Fügen mit dem enossalen Bereich oder nach dem Fügen eine Bohrung oder Ausnehmung einzubringen, welche beispielsweise mittels eines Gewindes versehen ist, um den koronalen Bereich einzuschrauben. Somit können Schrauben, das Abutment, welches zur prothetischen Versorgung benötigt wird, etc., dauerhaft und sicher befestigt werden. Insgesamt ergibt sich somit eine hohe mechanische Festigkeit des Dentalimplantats.

Oben stehend wurde als Beispiel für das erfindungsgemäß vorgesehene Fügeverfahren ein Klebeverfahren genannt. Im Rahmen der Erfindung kann es auch vorteilhaft sein, das Fügen mittels eines Lötverfahrens, eines Laserfügeverfahrens oder eines Pressfügeverfahrens durchzuführen. Es ergibt sich somit jeweils eine stoffschlüssige oder kraftschlüssige Verbindung. Diese kann durch die oben genannte formschlüssige Verbindung unterstützt werden.

Da das separate Einsatzelement nicht mit dem Knochengewebe des Patienten in Berührung kommt, ist erfindungsgemäß die Möglichkeit geschaffen, den enossalen Bereich aus Keramik zu fertigen oder mit einer Keramik-Außenschicht zu versehen, gleichzeitig jedoch eine hohe mechanische strukturelle Festigkeit zu gewährleisten. Die äußere Gestaltung des enossalen Bereichs kann in üblicher Weise erfolgen, beispielsweise mittels eines einstufigen oder mehrstufigen Gewindes, um den enossalen Bereich in eine Implantatbohrung des Kieferknochens des Patienten einzuschrauben.

Die axiale Länge des separaten Einsatzelements kann erfindungsgemäß ebenfalls in weitem Rahmen variiert werden, ebenso wie die Durchmesserverhältnisse zwischen dem Außendurchmesser des separaten Einsatzelements und dem Außendurchmesser des enossalen Bereichs.

Im Folgenden wird die Erfindung anhand eines Ausführungsbeispiels in Verbindung mit der Zeichnung beschrieben. Dabei zeigt:
- Fig. 1: eine Schnittansicht eines Ausführungsbeispiels des erfindungsgemäßen enossalen Bereichs,
- Fig. 2: eine Vergrößerung des Details Y gemäß Fig. 1,
- Fig. 3-5: unterschiedliche Ausgestaltungsvarianten des Details Z gemäß Fig. 1,
- Fig. 6-8: vereinfachte stirnseitige Konturansichten in Blickrichtung des Pfeils A von Fig. 1 auf die Kontur der Ausnehmung des enossalen Bereichs,
- Fig. 9-11: jeweils Axialschnitte bzw. stirnseitige Ansichten zweier weiterer Ausführungsbeispiele der Erfindung,
- Fig. 13 und 14: weitere Ausführungsbeispiele analog der Fig. 1,
- Fig. 15-17: weitere Detailansichten von Ausführungsbeispielen analog den Fig. 3-5,
- Fig. 18: eine Seiten-Schnittansicht eines weiteren Ausführungsbeispiels, analog Fig. 1,
- Fig.19-21: weitere Ausgestaltungsvarianten für eine formschlüssige Verankerung, analog den Fig. 6-8, und

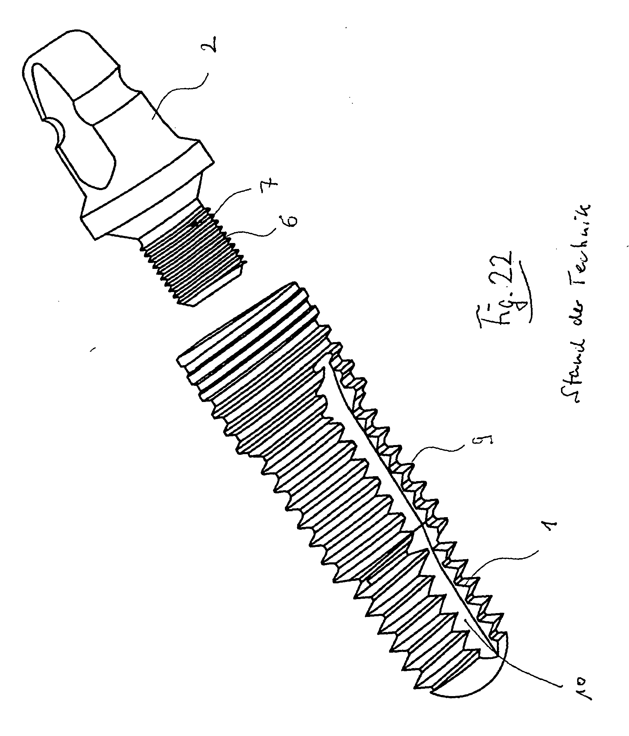

- Fig. 22: eine perspektivische Ansicht eines Dentalimplantats gemäß dem Stand der Technik.

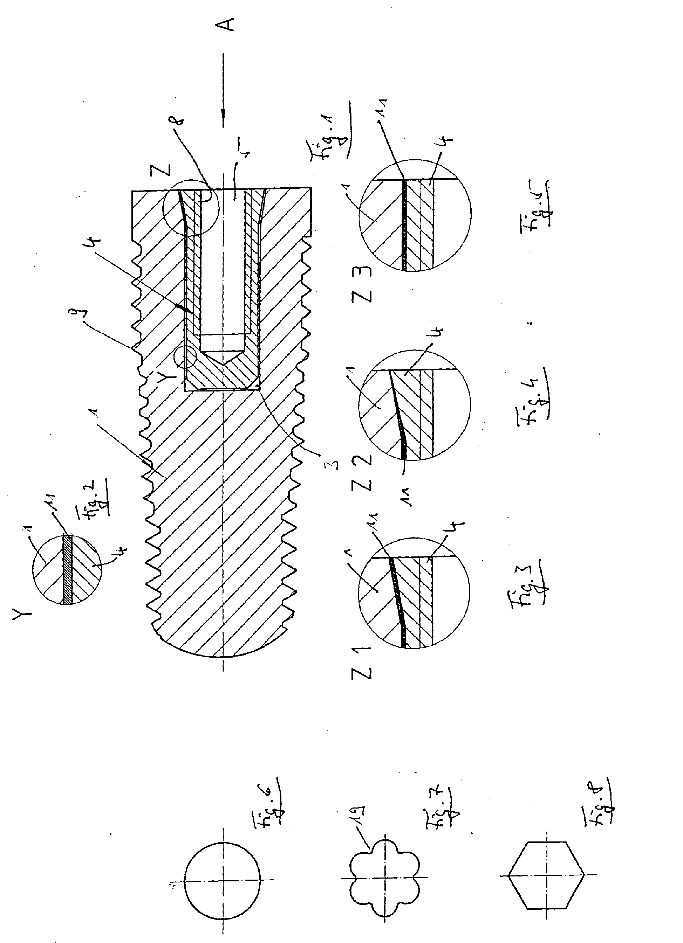

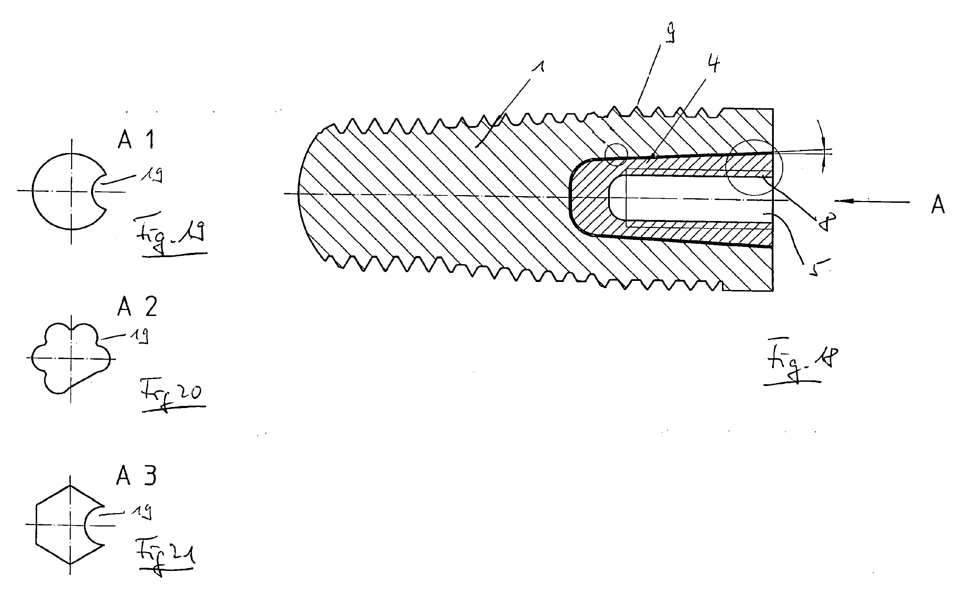

Die Fig. 18 zeigt ein zweiteiliges Dentalimplantat mit einem enossalen Bereich 1 sowie einem koronalen Bereich 2. Der koronale Bereich 2 weist einen Gewindeansatz 6 mit einem Außengewinde 7 auf. Das Außengewinde 7 ist in ein Innengewinde 8 einer zentrischen Ausnehmung 5 des enossalen Bereichs 1 (siehe Darstellung gemäß Fig. 1) einschraubbar.

Der enossale Bereich 1 ist mit einem Außengewinde 9 versehen, welches beispielsweise dreistufig ausgebildet sein kann, so wie dies der Stand der Technik zeigt. Weiterhin kann eine Spannut 10 vorgesehen sein, welche das Einschrauben des enossalen Bereichs 1 in eine Implantatbohrung eines Kieferknochens erleichtert.

Die Fig. 1 zeigt ein erstes Ausführungsbeispiel eines erfindungsgemäßen enossalen Bereichs 1 in axialer Längsansicht. Der enossale Bereich 1 ist dabei aus einem keramischen Werkstoff gefertigt und weist eine zentrische Ausnehmung 3 (Sacklochbohrung) auf. In diese ist mittels eines Fügeverfahrens (Fügeschicht/Klebschicht 11) ein bei dem gezeigten Ausführungsbeispiel im Wesentlichen zylindrisches Einsatzelement 4 spaltfrei eingeklebt. Das Fügen des Einsatzelements 4 erfolgt bei der Produktion des enossalen Bereichs 1, so dass der Zahnarzt im Operationsfeld bereits den fertigmontierten enossalen Bereich 1 zur Verfügung hat.

Das Einsatzelement 4 kann erfindungsgemäß aus einem gleichen Werkstoff oder einem unterschiedlichen Werkstoff wie der enossale Bereich gefertigt sein.

Das Einsatzelement 4 ist mit einer im Wesentlichen zylindrischen Ausnehmung 5 versehen, welche mit dem Innengewinde 8 versehen ist, welches zur Befestigung des koronalen Bereichs 2 dient.

Die Ausnehmung 5 des Einsatzelements 4 kann erfindungsgemäß vor dem Fügen des Einsatzelements 4 und des enossalen Bereichs 1 hergestellt werden. Es ist jedoch auch möglich, die Ausnehmung 5 nach dem Fügen zu fertigen.

Die Fig. 2 zeigt das Detail Y in vergrößerter Ansicht.

Die Fig. 3-5 zeigen unterschiedliche Ausgestaltungsvarianten des Details Z gemäß Fig. 1. Dabei ist ersichtlich, dass sowohl die Ausnehmung 3 als auch das Einsatzelement 5 vollständig zylindrisch ausgebildet sein können (Fig. 5). Es ist jedoch auch möglich, diese zum freien Endbereich hin konisch zu erweitern, entweder in paralleler Konizität (Fig. 3) oder in unterschiedlicher Konizität (Fig. 4). Bei dem Ausführungsbeispiel der Fig. 4 ergibt sich ein nur minimalster Fügespalt zur stirnseitigen Außenfläche des enossalen Bereichs 1. Die Fig. 6-8 zeigen jeweils stirnseitige vereinfachte Darstellungen in Blickrichtung des Pfeils A von Fig. 1, in welchen die mögliche Kontur des Querschnitts der Ausnehmung 3 sowie des Einsatzelements 4 dargestellt ist.

Die Fig. 6 zeigt eine rein zylindrische Ausgestaltung sowohl der Ausnehmung 3 als auch des Einsatzelements 4. Die Fig. 7 und 8 zeigen jeweils konturierte Ausgestaltungen, bei welchen zusätzlich zu der formschlüssigen Verbindung mittels der Fügeschicht 11 eine kraftschlüssige Verankerung vorgesehen ist, welche einer Drehbewegung um die zentrische Achse entgegenwirkt.

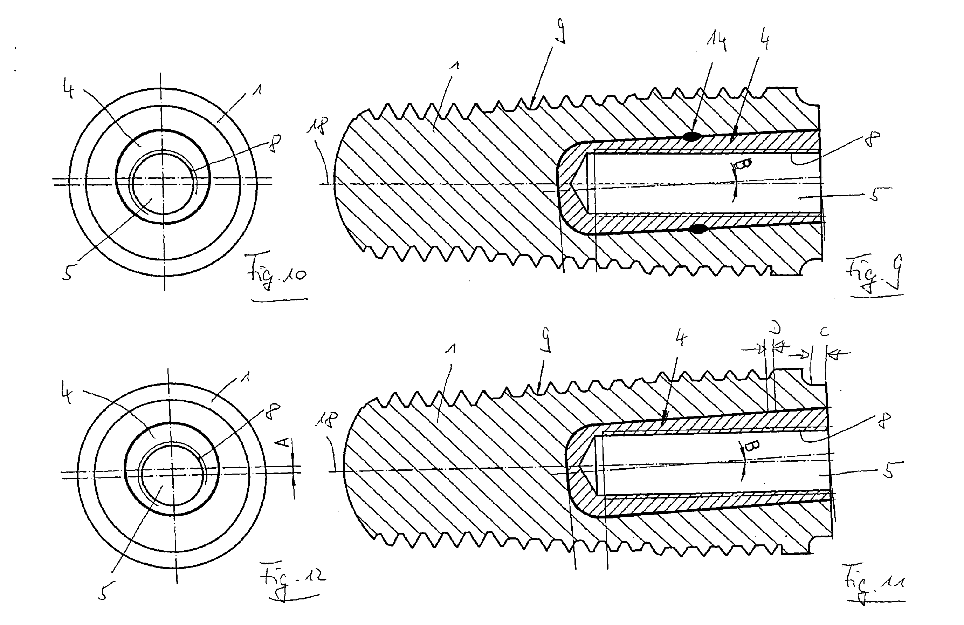

Die Fig. 9 und 11 zeigen jeweils weitere Ausgestaltungsvarianten in Schnittansicht analog Fig. 1 sowie in stirnseitiger Ansicht. Die Ausgestaltungsvarianten unterscheiden sich darin, dass die Ausnehmung 3 horizontal oder diagonal versetzt sein kann. Dies bringt den Vorteil, dass das Einsatzelement 4 zusätzlich hinsichtlich Rotation und axiale Lockerung gesichert ist. Um die axiale Sicherung und Fixierung zu verbessern, ist es besonders vorteilhaft, wenn die axiale Flankenlänge D des Außengewindes 9 kleiner ist, als die axiale Länge C des beispielsweise als Mehrkant oder Stufe oder konkave Präparation ausgebildeten Bereichs (siehe Fig. 11).

Wie in Fig. 9 gezeigt, kann zur zusätzlichen Sicherung des Einsatzelementes 4 ein umlaufender Freistich 14 vorgesehen sein, welcher als Nut/Ringnut ausgebildet ist. Dieser Freistich 14, welcher sowohl an dem enossalen Bereich 1 (Innenwandung der Ausnehmung 3) als auch an dem Außenumfang des Einsatzelements 4 ausgebildet sein kann, wir im Fügeprozess mit Fügematerial (beispielsweise Komposit) gefüllt und verankert nach dem Aushärten das Einsatzelement 4 zusätzlich in der Ausnehmung 3.

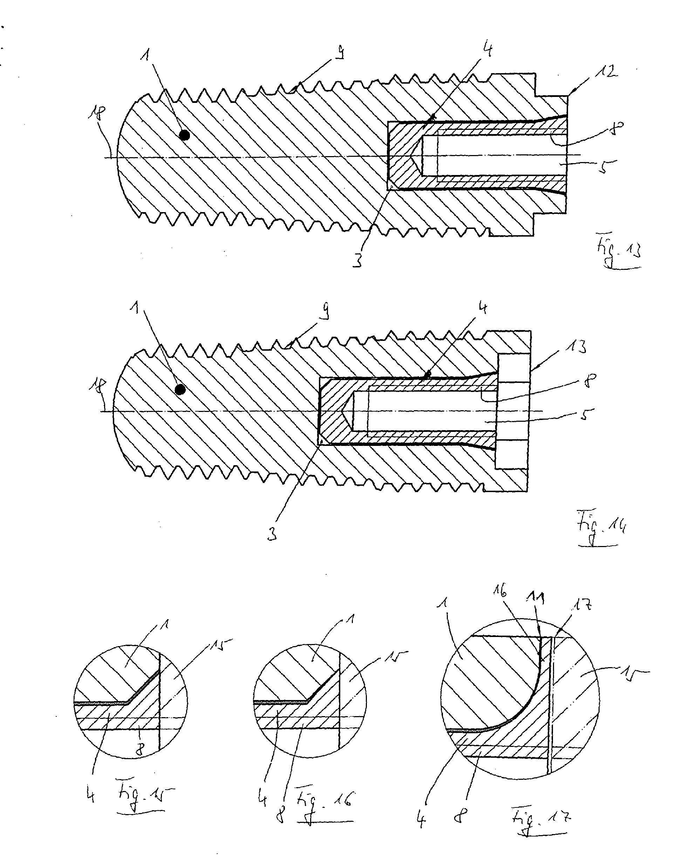

Die Fig. 13 und 14 zeigen weitere Ausgestaltungsvarianten, analog Fig. 1. Dabei ist gemäß Fig. 13 ein Außensechskant 12 vorgesehen, während gemäß Fig. 14 ein Innensechskant 13 ausgebildet ist. Es können auch andere formschlüssige Eingriffsflächen für Werkzeuge vorgesehen sein.

Die Fig. 15 und 16 zeigen weitere Ausgestaltungsvarianten analog den Fig. 3 und 4, wobei zusätzlich in schematischer Weise der Randbereich eines Abutments 15 dargestellt ist.

Die Fig. 17 zeigt eine weitere Ausführungsvariante, bei welcher das Einsatzelement 4 so ausgebildet ist, dass das Material des Einsatzelements 4 einen Flanschbereich 16 bildet, der beispielsweise aus Titan besteht und sich in radialer Richtung über den enossalen Bereich 1 erstreckt. Das Bezugszeichen 11 zeigt wieder die Fügeschicht. Der Flanschbereich 16 bildet somit eine "Dämpfungsschicht" zwischen dem enossalen Keramikimplantat (enossaler Bereich 1) und dem keramischen Abutment 15 und entlastet bei Biegewechselbelastung den keramischen Randbereich 17 des Abutments 15 bzw. des enossalen Bereichs 1.

Die Fig. 18-21 zeigen ein weiteres erfindungsgemäßes Ausführungsbeispiel. Dieses unterscheidet sich von dem Ausführungsbeispiel der Fig. 1 durch die konische Ausgestaltung des Einsatzelements 4 und der Ausnehmung 3. Der Konuswinkel führt somit zu konischen Fügeflächen zwischen dem Einsatzelement 4 und der Wandung der Ausnehmung 3 des enossalen Bereichs 1. Der Winkel beträgt beispielsweise zwischen 0° und 2°. Es ist jedoch auch möglich, diese konische Grundform mit einem sich erweiternden und beispielsweise mit einem Winkel von 45° versehenen Randbereich, analog Fig. 1, zu versehen.

Die Fig. 18 zeigt eine Ausgestaltungsvariante, bei welcher der stirnseitige Bereich des Einsatzelements 4 abgerundet ist und passend in der Ausnehmung 3 aufgenommen ist.

Die Abrundung ist insbesondere hinsichtlich einer keramik-gerechten Gestaltung besonders vorteilhaft, der Radius beträgt bevorzugterweise 0,5 mm.

Der Klebespalt für die Fügeschicht 11 (siehe Fig. 2) beträgt, wie auch bei den anderen Ausführungsbeispielen zwischen 5 µm und 200 µm, wobei ein bevorzugter Bereich zwischen 20 µm und 50 µm liegt.

Bei allen Ausführungsbeispielen kann es günstig sein, zusätzlich eine Entlüftungsnut vorzusehen, entweder an der Wandung der Ausnehmung 3 oder an der Außenwandung des Einsatzelements 4, um bei einem Einsetzen des Einsatzelements in die Ausnehmung 1 eine Entlüftung zu realisieren.

Die Fig. 19-21 zeigen stirnseitige Ansichten, analog den Fig. 6-8. Hierdurch ergibt sich eine konturierte Ausgestaltung des Querschnitts der Ausnehmung 3 bzw. des Einsatzelements 4. Insofern sind die Ansichten der Fig. 6-8 und 19-21 schematisch. Sie zeigen dabei insbesondere, dass entsprechende Axialnuten 19 vorgesehen sein können, die, da eine formschlüssige und passende Zuordnung der Kontur des Einsatzelements 4 und der Ausnehmung 3 vorliegt, entweder an dem Außenumfang des Einsatzelements 4 oder der Wandung der Ausnehmung 3 vorgesehen sein können.

### Bezugszeichenliste

- 1: Enossaler Bereich
- 2: Koronaler Bereich
- 3: Ausnehmung
- 4: Einsatzelement
- 5: Ausnehmung
- 6: Gewindeansatz
- 7: Außengewinde
- 8: Innengewinde
- 9: Außengewinde
- 10: Spannut
- 11: Fügeschicht
- 12: Außensechskant
- 13: Innensechskant
- 14: Freistich/Nut
- 15: Abutment
- 16: Flanschbereich
- 17: Randbereich
- 18: Mittelachse
- 19: Nut

## Patentansprüche

1. Dentalimplantat mit einem enossalen Bereich (1), an welchem ein koronaler Bereich (2) befestigbar ist, wobei der enossale Bereich (1) zumindest an seiner Außenseite aus einem keramischen Werkstoff gefertigt ist und an seiner dem koronalen Bereich (2) zugewandten Seite mit einer Ausnehmung (3) versehen ist, in welcher mittels eines Fügeverfahrens ein separates Einsatzelement (4) befestigt ist, an welchem der koronale Bereich (2) befestigbar ist, wobei das Einsatzelement (4) formschlüssig mit der Ausnehmung (3) des enossalen Bereichs (1) verbunden ist.

2. Dentalimplantat nach Anspruch 1, **dadurch gekennzeichnet, dass** die Ausnehmung (3) und das Einsatzelement (4) mit einem konturierten Querschnitt versehen sind.

3. Dentalimplantat nach Anspruch 1 oder 2, **dadurch gekennzeichnet, dass** die Wandung der Ausnehmung (3) und/oder die Außenkontur des Einsatzelementes (4) mit zumindest einer sich in Axialrichtung erstreckenden Nut (19) versehen sind.

4. Dentalimplantat nach einem der Ansprüche 1 bis 3, **dadurch gekennzeichnet, dass** das Einsatzelement (4) aus Kunststoff gefertigt ist.

5. Dentalimplantat nach einem der Ansprüche 1 bis 3, **dadurch gekennzeichnet, dass** das Einsatzelement (4) aus Keramik gefertigt ist.

6. Dentalimplantat nach einem der Ansprüche 1 bis 5, **dadurch gekennzeichnet, dass** die Ausnehmung (3) des enossalen Bereichs (1) axial zu diesem angeordnet ist.

7. Dentalimplantat nach einem der Ansprüche 1 bis 5, **dadurch gekennzeichnet, dass** die Ausnehmung (3) zur Aufnahme des Einsatzelements (4) horizontal zu einer Mittelachse (18) versetzt ist.

8. Dentalimplantat nach einem der Ansprüche 1 oder 2, **dadurch gekennzeichnet, dass** die Ausnehmung (3) zur Aufnahme des Einsatzelements (4), bezogen auf eine Mittelachse (18) des enossalen Bereichs (1) in einem Winkel (B) angeordnet ist.

9. Dentalimplantat nach einem der Ansprüche 1 bis 8, **dadurch gekennzeichnet, dass** die Ausnehmung (3) mit einem über ihre Länge gleich bleibenden Querschnitt versehen ist.

10. Dentalimplantat nach einem der Ansprüche 1 bis 8, **dadurch gekennzeichnet, dass** die Ausnehmung (3) über ihre Länge mit einem zum freien Ende sich erweiternden Querschnitt versehen ist.

11. Dentalimplantat nach einem der Ansprüche 1 bis 10, **dadurch gekennzeichnet, dass** das Einsatzelement (4) an seinem Endbereich mit einem Flanschbereich (16) versehen ist, welcher gegen den stirnseitigen Bereich des enossalen Bereichs (1) sowie gegen einen Randbereich (17) eines Abutments (15) anliegt.

12. Dentalimplantat nach einem der Ansprüche 1 bis 11, **dadurch gekennzeichnet, dass** das Einsatzelement (4) und der enossale Bereich (1) in einem spaltfreien Verbund gefügt sind.

13. Dentalimplantat nach einem der Ansprüche 1 bis 12, **dadurch gekennzeichnet, dass** das Einsatzelement (4) mit einer zentrischen Ausnehmung (5) versehen ist.

14. Dentalimplantat nach Anspruch 13, **dadurch gekennzeichnet, dass** die Ausnehmung (5) in Form einer Gewindeausnehmung ausgebildet ist.
